Europäisches Patentamt

European Patent Office

Office européen des brevets

(11) Veröffentlichungsnummer: **0 297 453**
**A1**

## (12) EUROPÄISCHE PATENTANMELDUNG

(21) Anmeldenummer: **88110097.8**

(22) Anmeldetag: **24.06.88**

(30) Priorität: **27.06.87 DE 8708955 U**

(43) Veröffentlichungstag der Anmeldung:
**04.01.89 Patentblatt 89/01**

(84) Benannte Vertragsstaaten:
**AT BE CH DE ES FR GB GR IT LI NL SE**

(51) Int. Cl.⁴: **B66D 5/04**

(71) Anmelder: **Fischbach GmbH & Co.KG Verwaltungsgesellschaft**

**D-5908 Neunkirchen/Siegerland 1(DE)**

(72) Erfinder: **Imhäuser, Werner**
**Lindenstrasse 14**
**D-5240 Alsdorf(DE)**

(74) Vertreter: **Boecker, Joachim, Dr.-Ing.**
**Rathenauplatz 2-8**
**D-6000 Frankfurt a.M. 1(DE)**

(54) **Fliehkraftbremse.**

(57) Fliehkraftbremse zur Kupplung an eine zu bremsende Welle mit einem an die Welle ankuppelbaren Träger (3), der zwei im wesentlichen halbzylinderförmige Fliehkraftkörper trägt, die an ihrer Peripherie mit radial nach außen vorstehenden kreisbogenförmigen Bremsflächen (51) versehen sind und die um je eine zur Drehachse (a) des Trägers (3) parallele, radial nach außen versetzte Schwenkachse (b) - schwenkbar sind, welche nahe einer Ecke des Fliehkraftkörpers verläuft, mit einem die Mantelflächen der Fliekraftkörper mit Spiel umfassenden stationären Gehäuse (7) und mit einer Feder (8), welche die beiden Fliekraftkörper (5) in einer sie ungefähr zur Kreiszylinderform ergänzenden Lage zusammenzuhalten versucht. Um das Bremsmoment der Fliehkraftbremse bei unveränderten Abmessungen zu vergrößern, ist gemäß der Erfindung die bogenförmige Bremsfläche (51) der Fliehkraftkörper (5) unsymmetrisch, und zwar in Richtung zur Ecke mit der Schwenkachse (b) hin angeordnet, und/oder an der gegenüberliegenden Ecke des Fliekraftkörpers ist in einer Bohrung (54) ein Stift aus einem Material angeordnet, dessen spezifisches Gewicht erheblich größer als das des aus Kunststoff bestehenden Fliekraftkörpers (5) ist (Figur 2).

Figur 2

# Fliehkraftbremse

Die Erfindung betrifft eine Fliehkraftbremse gemäß dem Oberbegriff des Anspruches 1.

Eine Fliehkraftbremse der vorgenannten Art kann im Zusammenhang mit vielen Vorrichtungen verwendet werden. Ein Anwendungsbeispiel ist ein Verstellantrieb, der zur Verstellung einer Absperrklappe in einer Lüftungsanlage eingesetzt wird. Der Verstellantrieb verstellt die Absperrklappe in Richtung ihrer einen Endlage, wobei er zugleich die Feder eines mechanischen Federmotors spannt und im gespannten Zustand festhält. Fällt beispielsweise die Stromversorgung für den Verstellantrieb aus, dann kann sich die Feder des Federmotors entspannen und die Absperrklappe in die andere Endlage zurückfahren.

Hierbei besteht die Gefahr, daß sich die Feder des Federmotors zu schlagartig entspannt und dabei einen Stoß verursacht, der zur Beschädigung von Teilen der Vorrichtung führen kann. Um dies zu verhindern, wird aus dem Getriebe des Verstellantriebes auf einer geeigneten Drehzahlstufe ein mit dem Getriebe verbundener Wellenzapfen herausgeführt, an wel chen eine Fliehkraftbremse der eingangs genannte Art angekoppelt wird. Wichtig ist bei vielen Anwendungen, daß die Fliehkraftbremse ein möglichst großes Bremsmoment bei möglichst geringem Raumbedarf entwickelt. Für die Unterbringung der Fliehkraftbremse, die beispielsweise seitlich an das Gehäuse des Verstellantriebes angeflanscht werden kann, steht oft nur wenig Raum zur Verfügung.

Der Erfindung liegt die Aufgabe zugrunde, eine Fliehkraftbremse der eingangs genannten Art zu entwickeln, die bei gleicher Baugröße im Vergleich zu ihrer bekannten Bauform ein größeres Bremsmoment entwickelt.

Zur Lösung dieser Aufgabe wird eine Fliehkraftbremse gemäß dem Oberbegriff des Anspruches 1 vorgeschlagen, welche erfindungsgemäß die im kennzeichnenden Teil des Anspruches 1 genannten Merkmale hat.

Vorteilhafte Ausgestaltungen der Erfindung sind in den Unteransprüchen genannt.

Anhand der in den Figuren gezeigten Ausführungsbeispiele soll die Erfindung näher erläutert werden. Es zeigen

Figur 1 ein Ausführungsbeispiel einer Fliehkraftbremse gemäß der Erfindung im Schnitt längs der Linie A-A in Figur 2,

Figur 2 einen Schnitt längs der Linie B-B in Figur 1,

Figur 3 eine Ansicht eines der in den Figuren 1 und 2 verwendeten Fliehkraftkörper, gesehen in Richtung der Pfeile C-C in Figur 2.

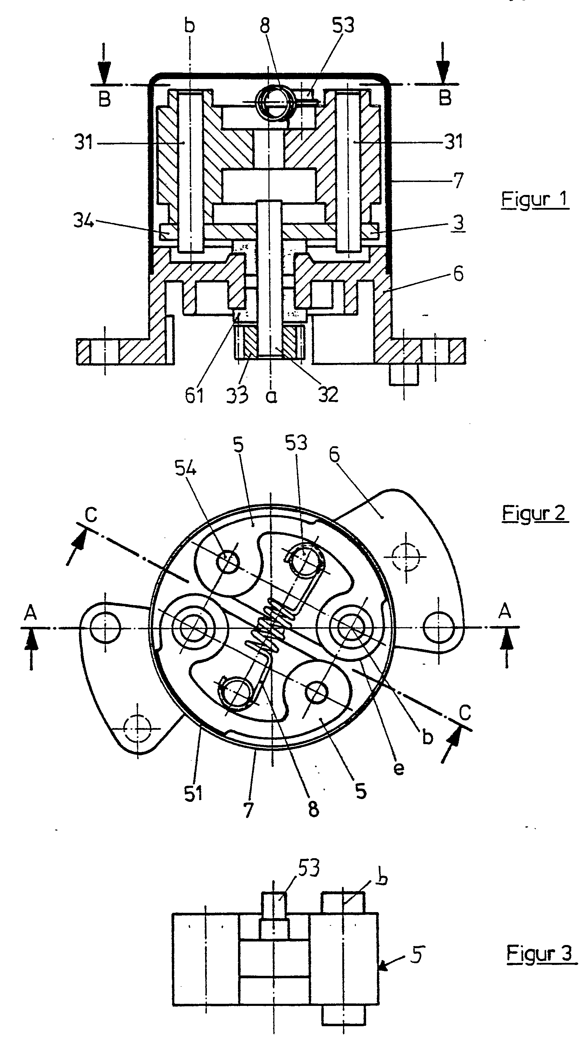

Die in den Figuren 1 und 2 gezeigte Fliehkraftbremse besteht im wesentlichen aus einem Sockel 6, einem Träger 3, zwei Fliehkraftkörpern 5 und einem Gehäuse 7. Der Träger 3 umfaßt eine Trägerwelle 32, die über eine Lagerbuchse 61 im Sockel 6 gelagert ist. An ihrem unteren Ende trägt die Trägerwelle ein Ritzel 33, mit welchem die Fliehkraftbremse an ein nicht dargestelltes Zahnrad auf der zu bremsenden Welle ankoppelbar ist. An ihrem oberen Ende trägt die Trägerwelle 32 eine vorzugsweise als längliches Rechteck ausgebildete Trägerplatte 34, in der zwei Achszapfen 31 diametral einander gegenüber fest angeordnet sind. Auf jedem Achszapfen 31 ist ein Fliehkraftkörper 5 - schwenkbar gelagert. Der Fliehkraftkörper hat eine etwa halbzylindrische Form mit einer peripheren geringfügig radial nach außen hervorgezogenen kreisbogenförmigen Bremsfläche 51, deren Radius dem Innenradius des topfförmigen Gehäuses 7 angepaßt ist. Die Bogenlänge der Bremsflächen muß eine gewisse Größe haben, damit es zu keinen zu hohen punktuellen Erwärmungen oder Abrieberscheinungen kommt. Die Schwenkachse b ist nahe einer Eckenkante des halbzylinderförmigen Fliehkraftkörpers angeordnet. Die beiden Fliehkraftkörper sind mittels einer auf Zug vorgespannten Feder 8 miteinander verbunden, die an geeigneten Zapfen 53 an den Fliekraftkörpern befestigt ist. Die Feder versucht also die beiden Fliehkraftkörper entgegen der Fliehkraft derart zusammenzuhalten, daß sie sich etwa zu einem zylindrischen Körper ergänzen und ein Kontakt zwischen den Bremsflächen 51 und dem Gehäuse 7 vermieden wird.

Bei einer schnellen Drehung der Trägerwelle 32 überwindet die Fliehkraft die relativ geringe Kraft der Feder 8, und die Fliekraftkörper werden mit ihren Bremsflächen gegen die Innenwand des Gehäuses 7 gedrückt, wodurch eine Bremswirkung auf die antreibende Welle ausgeübt wird.

Um bei gegebenen Abmessungen der Fliehkraftbremse das Bremsmoment zu vergrößern, ist die Bremsfläche gemäß der Erfindung derart unsymmetrisch an dem bogen- oder halbzylinderförmigen Fliehkraftkörper angeordnet, daß sie in Umfangsrichtung näher an der Ecke e liegt, an der sich die Schwenkachse b befindet. Hierdurch wird bei sonst gleichen Verhältnissen aufgrund des Hebelgesetzes ein größeres Bremsmoment bei gegebener Fliehkraft ausgelöst.

Zur weiteren Vergrößerung des Bremsmomentes ist vorgesehen, daß der Fliehkraftkörper mit Hilfskörpern versehen ist, deren spezifisches Gewicht größer als das spezifische Gewicht des Fliekraftkörpers ist. Diese Hilfskörper werden vorzugsweise möglichst weit von der Schwenkachse b entfernt angeordnet. In dem gezeigten Ausführungsbeispiel ist nahe der Ecke des Fliehkraftkörpers, die der Ecke e mit der Schwenkchse b gegenüberliegt, eine Ausnehmung in Form einer zur Drehachse a parallelen Bohrung 54 vorhanden, in die ein nicht dargestellter metallischer Stift mit einem bedeutend höheren spezifischen Gewicht als dem des Fliehkraftkörpers eingetrieben ist. Hierdurch wird bei sonst gleichen räumlichen Verhältnissen die Fliehkraft erhöht.

Als Material für die Fliehkraftkörper wird in der Regel ein Kunststoff verwendet, der mit der Innenseite des metallischen Gehäuses 7 einen möglichst großen Reibungskoeffizienten bildet.

Es versteht sich, daß die relativ schweren Hilfskörper in manigfacher Weise beispielsweise durch Kleben oder Anschrauben an dem Fliehkraftkörper befestigt werden können. Auch Ausnehmungen im Fliehkraftkörper, in denen die Hilfskörper angeordnet werden, können in vielfacher Gestalt ausgebildet sein.

## Ansprüche

1. Fliehkraftbremse zur Kupplung an eine zu bremsende Welle mit einem an die Welle ankuppelbaren Träger (3), der zwei im wesentlichen halbzylinderförmige Fliehkraftkörper trägt, die an ihrer Peripherie mit radial nach außen vorstehenden kreisbogenförmigen Bremsflächen (51) versehen sind und die um je eine zur Drehachse (a) des Trägers (3) parallele, radial nach außen versetzte Schwenkachse (b) schwenkbar sind, welche nahe einer Ecke des Fliehkraftkörpers verläuft, mit einem die Mantelflächen der Fliekraftkörper mit Spiel umfassenden stationären Gehäuse (7) und mit einer Feder (8), welche die beiden Fliekraftkörper (5) in einer sie ungefähr zur Kreiszylinderform ergänzenden Lage zusammenzuhalten versucht, **dadurch gekennzeichnet**, daß die Bremsflächen (51) der Fliehkraftkörper(5) in peripherer Richtung nahe der Schwenkachse (b) angeordnet sind.

2. Fliehkraftbremse nach Anspruch 1, **dadurch gekennzeichnet**, daß an den Fliehkraftkörpern (5) Hilfskörper befestigt sind, die aus einem Material bestehen, dessen spezifisches Gewicht größer ist als das des Materials der Fliehkraftkörper.

3. Fliehkraftbremse nach Anspruch 2, **dadurch gekennzeichnet**, daß die Fliehkraftkörper (5) mit Ausnehmungen (54) versehen sind, in denen die Hilfskörper angeordnet sind.

4. Fliehkraftbremse nach Anspruch 2 oder 3, **dadurch gekennzeichnet**, daß die Hilfskörper möglichst weit von der Schwenkachse (b) des betreffenden Fliekraftkörpers (5) entfernt angeordnet sind.

5. Fliehkraftbremse nach einem der Ansprüche 3 oder 4, **dadurch gekennzeichnet**, daß die Ausnehmungen aus einer zur Schwenkachse (b) parallelen Bohrung (54) bestehen, in der ein Stift aus dem Material mit dem höheren spezifischen Gewicht angeordnet ist.

6. Fliehkraftbremse nach einem der vorhergehenden Ansprüche, **dadurch gekennzeichnet**, daß die Schwenkachsen (b) von zwei zur Drehachse (a) des Trägers (3) parallelen, radial nach außen versetzten Achszapfen (31) gebildet werden, die auf dem Träger fest angeordnet sind.

7. Fliehkraftbremse nach einem der vorhergehenden Ansprüche, **dadurch gekennzeichnet**, daß der Träger (3) in einen Sockel (6) gelagert ist, der auch das Gehäuse (7) trägt.

8. Fliehkraftbremse nach einem der vorhergehenden Ansprüche, **dadurch gekennzeichnet**, daß die Fliehkraftkörper (5) aus einem Kunststoff bestehen, welcher mit dem Material an der Innenseite des Gehäuses (7) einen hohen Reibungskoeffizienten bildet.

23.6.1988
22·053 PE

Figur 1

Figur 2

Figur 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| X | DE-C- 14 611 (BECKER) <br> * Figur 1; Seite 1, Zeilen 28-39 * | 1-4,6 | B 66 D 5/04 |
| Y | | 5,8 | |
| | --- | | |
| X | GB-A- 138 704 (WHARTON) <br> * Seite 2, Zeilen 1-14 * | 1,7 | |
| | --- | | |
| Y | DE-C-1 035 480 (ZIMMERMANN) <br> * Spalte 2, Zeilen 17-42 * | 5,8 | |
| | --- | | |
| X | DE-C- 520 514 (FOLMAN) <br> * Figur 1; Anspruch 2 * | 1 | |
| A | | 6,7 | |
| | --- | | |
| A | DE-C- 134 261 (OEHLMANN) <br> * ganzes Dokument * | 1 | |
| | --- | | |
| A | CH-A- 71 099 (SILBERTAL) <br> * ganzes Dokument * | 1 | |
| | ----- | | |

RECHERCHIERTE SACHGEBIETE (Int. Cl.3)

B 66 D 5/00

Der vorliegende Recherchenbericht wurde für alle Patentansprüche erstellt

| Recherchenort | Abschlußdatum der Recherche | Prüfer |
|---|---|---|
| BERLIN | 29-09-1988 | STANDRING M A |